# EUROPEAN PATENT APPLICATION

(11) **EP 3 957 954 A1**
(43) Date of publication of application: **23.02.2022**
(21) Application number: 21190227.5
(22) Date of filing: 06.08.2021
(51) Int. Cl.: G01C 21/20, G06T 7/70, G01C 21/16, G01C 11/02

(54) **ACTIVE GIMBAL STABILIZED AERIAL VISUAL-INERTIAL NAVIGATION SYSTEM**

(30) Priority: 19.08.2020 IN 202011035697; 06.11.2020 US 202016949624
(71) Applicant: Honeywell International Inc., Charlotte, NC 28202 (US)
(72) Inventor: RAWAL, Naman, Charlotte, 28202 (US)
(74) Representative: Haseltine Lake Kempner LLP

(57) **Abstract**

A vehicle navigation system can acquire a plurality of images with a camera; determine at least one feature in one or more image of the plurality of images; reduce, via image feature tracking, a rotational noise associated with a motion of the camera in the one or more images; determine one or more keyframes based on the one or more images with reduced rotational noise; determine an optical flow of one or more of the plurality of images based on the one or more keyframes; determine a predicted depth of the at least one feature based on the optical flow; determine a pose and a motion of the camera based on the optical flow and the predicted depth of the at least one feature; and determine a first pose and a first motion of the vehicle based on the determined pose and motion of the camera and gimbal encoder information.

## Description

This application claims priority to Indian Provisional Patent Application No. 202011035697, entitled "ACTIVE GIMBAL STABILIZED AERIAL VISUAL-INERTIAL NAVIGATION SYSTEM" and filed on August 19, 2020, the entire content of which is incorporated herein by reference.

### TECHNICAL FIELD

The disclosure relates to visual navigation.

### BACKGROUND

Imagery and photogrammetry are commonly included in vehicles, including unmanned aerial vehicles (UAVs) and urban air mobility vehicles such as helicopters and flying taxis. In some instances, machine vision using aerial imagery may be used for navigation of the vehicle, or to enhance vehicle navigation.

### SUMMARY

Vehicle navigation systems and techniques described herein may improve machine vision for feature tracking, simultaneous localization and mapping (SLAM), and/or camera and vehicle pose estimation by reducing rotational noise associated with vehicle rotational vibrations and translations via gimbal stabilization.

In some examples, the disclosure describes a method of vehicle navigation, the method comprising: acquiring a plurality of images with a camera while a vehicle is operating, wherein the camera is mounted to a gimbal mounted to the vehicle; determining, using processing circuitry, at least one feature in one or more image of the plurality of images; tracking, via the gimbal, the at least one feature, wherein tracking the at least one feature comprises causing, by the processing circuitry, the gimbal to move the camera such that rotational noise associated with motion of the vehicle in one or more of the plurality of images is reduced; determining, using the processing circuitry, an optical flow of one or more of the plurality of images based on the one or more images having reduced rotational noise; determining, using the processing circuitry, a pose and a motion of the camera for each of the one or more images of the plurality of images based on the determined optical flow; determining, using the processing circuitry, a first pose and a first motion of the vehicle based on the determined pose and motion of the camera and gimbal encoder information; and causing, using processing circuitry, the vehicle to navigate to at least one of a second pose and a second motion of the vehicle based on the determined first pose and first motion of the vehicle.

In some examples, the disclosure describes a vehicle navigation system, comprising: a gimbal mounted on a vehicle; a camera mounted on the gimbal; and processing circuitry configured to: acquire a plurality of images with a camera while a vehicle is operating, wherein the camera is mounted to a gimbal mounted to the vehicle; determine at least one feature in one or more image of the plurality of images; track, via the gimbal, the at least one feature, wherein tracking the at least one feature comprises causing the gimbal to move the camera such rotational noise associated with motion of the vehicle in one or more of the plurality of images is reduced; determine an optical flow of the one or more of the plurality of images based on the determined optical flow; determine a pose and a motion of the camera for each of the one or more images of the plurality of images based on the determined optical flow; determine a first pose and a first motion of the vehicle based on the determined pose and motion of the camera and gimbal encoder information; and cause the vehicle to navigate to at least one of a second pose and a second motion of the vehicle based on the determined first pose and first motion of the vehicle.

In some examples, the disclosure describes a method of determining a pose and a motion of a vehicle, the method comprising: acquiring a plurality of images with a camera mounted to a gimbal mounted to a vehicle; determining, using processing circuitry, at least one feature in one or more image of the plurality of images; reducing, via image feature tracking, a rotational noise associated with a motion of the camera in the one or more images; determining, using the processing circuitry, one or more keyframes based on the one or more images with reduced rotational noise; determining, using the processing circuitry, an optical flow of one or more of the plurality of images based on the one or more keyframes; determining, using the processing circuitry, a predicted depth of the at least one feature based on the optical flow; determining, using the processing circuitry, a pose and a motion of the camera based on the optical flow and the predicted depth of the at least one feature; and determining, using the processing circuitry, a first pose and a first motion of the vehicle based on the determined pose and motion of the camera and gimbal encoder information.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a conceptual diagram of a vehicle navigation system, in accordance with one or more techniques of this disclosure.
FIG. 2 is a conceptual diagram of a vehicle navigation system including an active 3-axis gimbal, in accordance with one or more techniques of this disclosure.
FIG. 3 is a flowchart of an example method of tracking an object, in accordance with one or more techniques of this disclosure.
FIG. 4 is a flowchart of an example method of vehicle navigation, in accordance with one or more techniques of this disclosure.

### DETAILED DESCRIPTION

In some examples, this disclosure describes methods and systems of vehicle navigation including using one or more cameras mounted on one or more gimbals attached to a vehicle to track one or more features of a real-world scene. For example, a system may determine sparse features such as corners, edges, markings, and the like, and additionally or alternatively a system may determine dense features such as ground, three-dimensional objects, buildings, and the like. The system may determine an optical flow of and a predicted depth of the determined sparse and/or dense features based on one, two, or more images acquired by the camera. In some examples, the system may track sparse and/or dense features determined features via their determined optical flow. In some examples, the system may localize sparse and/or dense features via their predicted and/or estimated depth. For example, the system may determine a pose and a motion of the camera(s) based on the determined optical flow. The system may determine a pose and a motion of the vehicle based on the pose and motion of the camera(s) and one or more gimbal encoders. The system and method may further simultaneously localize and map both the vehicle and the one or more features of the real-world scene based on the determined pose of the camera(s). The system may navigate a vehicle based on the determined pose and motion of the vehicle and/or the localization of the vehicle and/or one or more features of the real-world scene.

In some examples, the tracking of the one or more features via one or more gimbals may include stabilizing the camera(s) relative to the real-world scene and reducing rotational noise in the images acquired by the camera(s), e.g., the gimbal(s) may reduce motion blur in one or more images due to the motion of the vehicle. The reduction of rotational noise may improve the accuracy and precision of the optical flow and predicted depth of each image, and thereby improve the precision and accuracy of determination of the pose and motion of the camera(s). The reduction of rotational noise may also improve keyframe selection and quality, thereby improving the simultaneous localization and mapping (SLAM) of the vehicle and the at least one feature.

Incorporating machine vision in navigation solutions has been a topic of research for several decades, mainly due to the importance of vision in human navigation and autonomy. Apart from challenges in machine vision, aerial navigation poses further problems when dealing with 6D motions. Especially because computer vision solutions tend to be inaccurate with rotations vs translations. For example, scale inaccuracies and inaccurate localization due to drift can be caused by inadequate and/or noisy perception of camera and/or vehicle rotation. During active flight, real-time navigation of aerial vehicles may depend on accurate perception of a scene, especially in GPS-denied environments where vision is capable of augmenting existing Global Navigation Satellite system (GNSS) and Inertial Navigation System (INS) based navigation solutions. Current solutions incorporate a statically mounted camera onboard a vehicle and deploy a perception algorithm either rooted in traditional computer vision or deep learning-based computer vision algorithms which allows depth and motion perception. These solutions still suffer from drift and scale inaccuracies especially due to inaccuracies in estimating motion.

SLAM may require tracking the motion of the camera(s) over every consecutive frame using optical flow within each frame and predicted depth of each frame. This information may then be used to estimate the relative change in pose, e.g., the position and orientation of the camera(s) in every consecutive frame. The pose may then be tracked over multiple frames to estimate a camera state and motion over time, e.g., the 6D pose of a camera and its derivatives, such as velocities and angular rates. For aerial vehicles with statically mounted cameras, the camera motion may include rotational noise resulting from the need to maintain control over the vehicle while also estimating its own state of motion. This rotational noise may make it difficult for visual perception algorithms to accurately track motion over long sequences where errors in rotation tend to cause drifts in pose estimation.

The present disclosure may solve these problems by using a system of one or more cameras each including an inertial measurement unit (IMU) and mounted on one or more gimbal-stabilized platforms to allow better focusing on the scene for localization and mapping. For example, providing active stabilization to a camera may reduce motion estimation errors and reduce drift and scale inaccuracies of pose estimation by reducing the amount of rotational noise in images acquired by the camera. A system with active stabilization may also reduce motion blur and lack of overlap between features in a sequence of images that occur due to 6D motion. In other words, a system with active camera stabilization may increase the accuracy of pose and motion estimate of a vehicle and/or SLAM of the vehicle and the real world proximate the vehicle, and thereby improve the accuracy of visual navigation of the vehicle. The IMU may contribute to gimbal stabilization along with the gimbal encoder. Additionally, IMU data may be used for sensor fusion, e.g., between multiple sensors such as a camera and an encoder of a gimbal to which the camera is mounted, and sensor fusion may be used to improve camera state estimation (6D pose and derivatives) from camera images. In some examples, sensor fusion may be done using a Bayes' Filter Scheme, a Pose Graph Optimization Framework, or any other suitable sensor fusion technique.

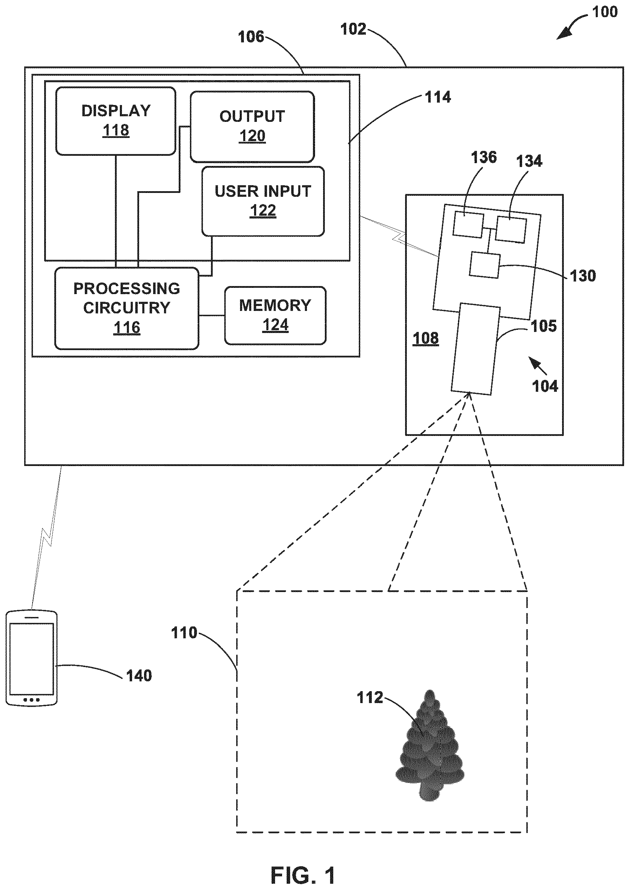

FIG. 1 is a conceptual diagram of a vehicle navigation system 100, in accordance with one or more techniques of this disclosure. In the example shown, vehicle navigation system 100 includes vehicle 102, computing device 106 and/or mobile computing device 140, camera 104, and orienting system 108. In some examples, a field of view of camera 104 may include real-world scene 110, and real-world scene 110 may include object 112. Object 112 may be, for example, an object of importance, an object of interest, a tracking object, or the like.

In some examples, vehicle 102 may be a UAV, a helicopter, an aircraft, a watercraft such as a ship, a boat, a submarine, etc., a land-based vehicle such as a car, truck, van, etc., a bicycle, or any type of motor-powered or human-powered vehicle. Vehicle 102 may be any vehicle capable of mounting a gimbal. In the example shown, vehicle 102 includes computing device 106 and orienting system 108. In some examples, computing device 106 may be located remote to vehicle 102, e.g., computing device may be mobile computing device 140. Computing device 106 and/or mobile computing device 140 may communicate with vehicle 102 and/or orienting system 108 via a communication interface.

In some examples, orienting system 108 may be a multi-axis gimbal, for example, a two-axis gimbal, a three-axis gimbal, or any type of gimbal. In some examples, orienting system 108 may be an active gimbal, e.g., a motorized gimbal configured to move about one or more axes via one or more motors causing a rotation. In other examples, orienting system 108 may be a passive gimbal, e.g., a non-motorized gimbal that may include weights to counteract changes in direction. In other examples, orienting system may be any type of system configured to orient a camera system to view a desired scene, e.g., real-world scene 110. In the example shown, camera 104 including lens 105 may be fixably attached to orienting system 108.

In the example shown, camera 104 includes camera body 107 and lens 105. In some examples, camera body 107 may include an imaging sensor, such as a focal plane array of light sensitive pixels configured to capture an image of a scene imaged by lens 105. Camera body 107 may provide structure for the mounting of lens 105 relative to the imaging sensor, as well as for mounting and protection of other sensors (e.g., an IMU) and camera processing circuitry, e.g., to control auto-focus, zoom, changing the lens aperture, imaging sensor exposure (integration time), receive image data from the imaging sensor, control and receive data from the IMU, and the like. In some examples, lens 105 may be a variable lens, e.g., a zoom lens and/or telephoto lens having a variable focal length. In other examples, lens 105 may be detachable from camera 104, and an alternative lens may replace lens 105, for example, a wide-angle lens, a wavelengthfiltered lens, and the like.

In some examples, camera 104 may be configured to capture one or more images of a real-world scene, e.g., real-world scene 110. Camera 104 may be any type of camera or video camera capable of capturing at least one image, and/or a sequence of images, and/or video. The sequence of images may be two or more images taken at regular or irregular intervals. For example, a sequence of images may include a video stream of images taken at 5 Hz, 10 Hz, 15 Hz, 30 Hz, 60 Hz, 200 Hz, 350 Hz, 500 Hz, 1000 Hz, or at any other frequency usable for tracking objects.

In some examples, camera 104 may include inertial measurement unit (IMU) 130. IMU 130 may be a 3-axis, 6-axis, or 9-axis IMU. For example, IMU 130 may include a 3-axis accelerometer configured to detect linear acceleration in three principal directions. IMU 130 may further include a 3-axis gyroscope configured to detect rotational rate about three principal directions, e.g., IMU 130 may be a 6-axis device. IMU 130 may further include a 3-axis magnetometer configured to detect a magnetic field as a heading reference, e.g., IMU 130 may be a 9-axis device. IMU 130 may include one accelerometer, gyroscope, and magnetometer for three vehicle axes, e.g., pitch, roll, and yaw. IMU 130 may also include a temperature sensor. For example, IMU 130 may be a ten degree of freedom IMU including a 3-axis accelerometer, a 3-axis gyroscope, a 3-axis magnetometer, and a temperature sensor. In some examples, temperature sensor data from IMU 130 temperature sensor may be used to correct for temperature biases in certain IMU 130 sensors, such as microelectromechanical systems (MEMs) accelerometer sensors.

In some examples, camera 104 may be communicatively coupled, for example by a wired or a wireless connection, to computing device 106 and/or mobile computing device 140 and a captured image, image sequence, video, etc., may be transferred to computing device 106 and/or mobile computing device 140, for example, for image processing such as that described below. Camera 104 may also transfer IMU motion information, e.g., linear acceleration, rotation rate, and heading for three vehicle axes, to computing device 106 and/or mobile device 140. In some examples, camera 104 may include processing circuitry 136 and memory 134 and may process the IMU motion information, image and/or video without transferring the image and/or video to computing device 106 and/or mobile computing device 140.

Description and references in this disclosure with respect to computing device 106 apply equally to mobile computing device 140 unless stated otherwise. In the illustrated example, computing device 106 may include processing circuitry 116 coupled to memory 124 and to display 118, output 120, and user input 122 of a user interface 114. Processing circuitry 116 of computing device 106, as well as processing circuitry 136 of camera 104, and other processing modules or circuitry described herein, may be any suitable software, firmware, hardware, or combination thereof. Processing circuitry 116 and 136 may include any one or more microprocessors, controllers, digital signal processors (DSPs), application specific integrated circuits (ASICs), field-programmable gate arrays (FPGAs), graphical processing units (GPUs), or discrete logic circuitry. The functions attributed to processors described herein, including processing circuitry 116 and 136, may be provided by processing circuitry of a hardware device, e.g., as supported by software and/or firmware.

In some examples, processing circuitry 116, as well as processing circuitry 136, is configured to determine orientation information associated with tracking an object in a real-world scene. For example, processing circuitry 116 may determine pan, roll, and tilt angles for orienting system 108 to center object 112 in the field of view of camera 104 based on an image, or images, of real-world scene 110 captured by camera 104. Processing circuitry 116 and 136 may perform any suitable signal processing of a sequence of images to filter the sequence of images, such as any suitable band-pass filtering, adaptive filtering, closed-loop filtering, any other suitable filtering, analytical, regression, machine learning, or processing as described herein, and/or any combination thereof. Processing circuitry 116 and 136 may also receive input signals from IMU 130 containing motion information. Processing circuitry 116 and 136 may also receive input signals from additional sources (not shown). For example, processing circuitry 116 may receive an input signal containing position information, such as Global Navigation Satellite System (GNSS) coordinates of vehicle 102. Additional input signals may be used by processing circuitry 116 and 136 in any of the calculations or operations performed by processing circuitry 116 and 136. In some examples, processing circuitry 116 and 136 may be adapted to execute software, which may include an operating system and one or more applications, as part of performing the functions described herein. In some examples, processing circuitry 116 and 136 may include one or more processing circuitry modules for performing each or any combination of the functions described herein.

In some examples, processing circuitry 116 may be coupled to memory 124, and processing circuitry 136 may be coupled to memory 134. Memory 124, as well as memory 134, may include any volatile or non-volatile media, such as a random-access memory (RAM), read only memory (ROM), non-volatile RAM (NVRAM), electrically erasable programmable ROM (EEPROM), flash memory, and the like. Memory 124 and 134 may be a storage device or other non-transitory medium. Memory 124 and 134 may be used by processing circuitry 116 and 136, respectively, for example, to store information corresponding vehicle 102 position and/or tracking object 112. In some examples, processing circuitry 116 and 136 may store measurements, previously received data from an image or a sequence of images in memory 124 and 134, respectively, and/or calculated values for later retrieval.

Processing circuitry 116 may be coupled to user interface 114 including display 118, user input 122, and output 120. In some examples, display 118 may include one or more display devices (e.g., monitor, personal digital assistant (PDA), mobile phone, tablet computer, any other suitable display device, or any combination thereof). For example, display 118 may be configured to display an image and/or tracking information. In some examples, user input 122 is configured to receive input from a user, e.g., information corresponding to vehicle 102, orienting system 108, and/or camera 104. For example, a user may input information such as camera parameters, e.g., camera type, lens focal length, exposure time, video capture rate, lens aperture, and the like.

User input 122 may include components for interaction with a user, such as a keypad and a display, which may be the same as display 118. In some examples, the display may be a cathode ray tube (CRT) display, a liquid crystal display (LCD) or light emitting diode (LED) display and the keypad may take the form of an alphanumeric keypad or a reduced set of keys associated with particular functions. User input 122, additionally or alternatively, include a peripheral pointing device, e.g., a mouse, via which a user may interact with the user interface. In some examples, the displays may include a touch screen display, and a user may interact with user input 122 via the touch screens of the displays. In some examples, the user may also interact with user input 122 remotely via a networked computing device.

In the example shown, real-world scene 110 may include one or more objects within the field of view of camera 104, such as object 112.

To track an object in real-world scene 110, such as object 112, orienting system 108 may change one or more of a pan, roll, and tilt angle. In some examples, computing device 106, angle based on one or more captured images, may automatically determine one or more of a pan, roll, and tilt angle that keep the object 112 at substantially the same position within the field of view of camera 104. For example, at a point in time, computing device 106 may automatically determine one or more pan, roll and tilt angle of orienting system 108 at which object 112 will be substantially centered in the field of view of camera 104 based on the position and motion of the image of object 112 within one or more previously captured images. Computing device 106 may then cause orienting system 108 to move to the determined pan, roll, and tilt angle and computing system 106 may cause camera 104 to capture one or more additional images.

In some examples, tracking object 112 reduces rotational noise within the captured images. Rotational noise may include rotational vibrations in a vehicle which may occur due to attitude corrections during vehicle control to maintain a trajectory. For example, in forward motion, an aircraft may pitch forward (in case of quadrotors). In another example, an aircraft would require high rate rotational corrections to maintain hover in the presence of wind. Additionally, rotational noise may occur during translation of a vehicle. A gimbal may reduce the effects of vehicle translational motion in one or more images using the rotational stabilization of the gimbal.

In some examples, when vehicle 102 is moving and object 112 is static, e.g., not moving with respect to real-world scene 110, tracking object 112 may reduce blurring of the image due to the vehicle's motion. A reduction in rotational noise of one or more images within a time-sequence of images sequence of images may reduce drift and scale inaccuracies, and thereby increase the accuracy and precision of determining the optical flow of images of the sequence of images. As a result, tracking object 112 may increase the accuracy and precision of determining the pose and motion of the camera which may be based on the optical flow.

Additionally, reducing the rotational noise in one or more images of a sequence of images may improve keyframe selection and visual SLAM. For example, keyframes define the starting and ending points of any smooth transition of motion, e.g., the motion of either camera 104 and/or real-world scene 110 relative to camera 104. The reduction of the rotational noise in the one or more images improves the accuracy of determination of motion transitions in the sequence of images, thereby improving the starting and ending point of motion transitions and the selection of keyframes. In some examples, vehicle navigation system 100 may be configured to reduce rotational noise in the one or more images, thereby increasing the accuracy of motion transition estimation with a sequence of images thereby improving feature extraction and keyframe selection, thereby improving the accuracy of visual pose estimation and depth maps, thereby improving point cloud registration and localization.

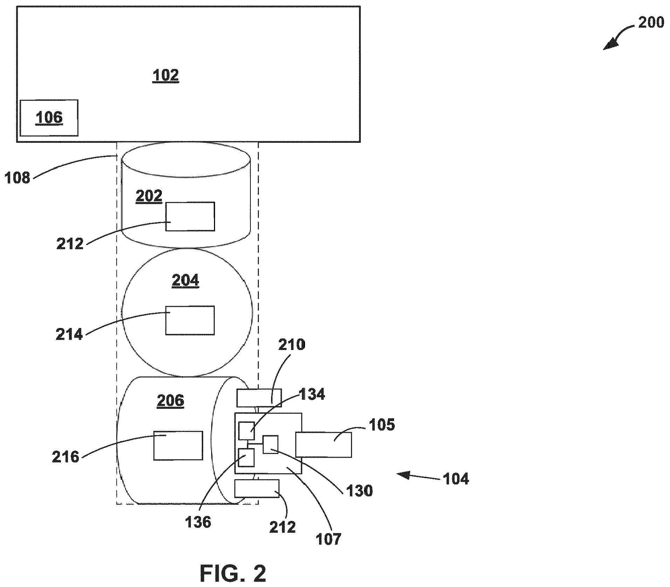

FIG. 2 is a conceptual diagram of a vehicle navigation system 200 including an active 3-axis gimbal, in accordance with one or more techniques of this disclosure. In the example shown, vehicle navigation system 100 includes vehicle 102, computing device 106, camera 104, and orienting system 108. Vehicle navigation system 200 may be substantially similar to vehicle navigation system 200, with the example shown in FIG. 2 illustrating further details with respect to orienting system 108.

Vehicle 102 may be an aircraft, a watercraft, or a land-based vehicle, and may include computing device 106 and/or may be communicatively connected to computing device 106, and vehicle 102 may include orienting system 108.

In some examples, a camera 104 may be included and/or attached to orienting system 108. In the example shown, camera 104 includes lens 105, camera body 107, IMU 130, and may include memory 124 and processing circuitry 136.

In the example shown, orienting system 108 is a three-axis gimbal including a yaw motor 202 configured to rotate about the z-axis as shown, a roll motor 204 configured to rotate about the y-axis as shown, and a pitch motor 206 configured to rotate about the x-axis as shown, and collectively referred to as gimbal motors 202-206. Gimbal motors 202-206 may be a part of, or configured to be attached to, vehicle 102. In the example shown, yaw motor 202 is attached to vehicle 102, roll motor 204 is attached to yaw motor 202, and pitch motor 206 is attached to roll motor 204, however, gimbal motors 202-206 may be attached or otherwise ordered or configured in any order. Gimbal motors 202-206 may be configured to operate together so as to orient a camera 104 in any direction. In some examples, orienting system 108 may include a single motor configured to rotate to any angle, e.g., any yaw, roll, and pitch angle, as opposed to the combination of three single-axis gimbal motors 202-206 as illustrated.

Each of gimbal motors 202-206 may include an encoder. For example, yaw motor 202 may include encoder 212, roll motor 204 may include encoder 214, and pitch motor 206 may include encoder 216, collectively referred to as encoders 212-216. Encoders 212-216 may be configured to convert any of a rotary and/or linear position and/or position change to an electronic signal, e.g., a rotary and or linear position of each of gimbal motors 202-206, respectively. For example, encoders 212-216 may each be any of a rotary encoder, a linear encoder, an absolute encoder, an incremental encoder, and the like. Each of encoders 212-216 may be the same as each other, or each of encoders 212-216 may be different from one other in any combination. Encoders 212-216 may be configured to communicate the electronic signal corresponding to a rotary and/or linear position to computing device 106, which may convert the electronic signals of each of encoders 212-216 to a combined rotary and/or linear position, e.g., an orientation and/or pose, relative to the orientation and/or pose of vehicle 102. For example, camera 104 may be attached to one of gimbal motors 202-206 in a known and static orientation and/or pose, and gimbal motors 202-206 may be configured thereafter to control the pose of camera 104 via motor movement. Encoders 212-216 may track the rotary and/or linear position of each of motors 202-206, respectively, and may send electronic signals corresponding to rotary and/or linear positions to computing device 106. Computing device 106 may determine an orientation and/or pose of camera 104 relative to the orientation and/or pose of vehicle 102. In other words, orienting system 108 may orient camera 104 relative to vehicle 102, which may itself yaw, roll, and pitch with respect to the rest of the world, e.g., the environment and/or the landscape around vehicle 102. In some examples, encoders 212-216 may communicate the electronic signal corresponding to a rotary and/or linear position to camera 104, which may include memory 134 and processing circuitry 136 and perform the same functions as computing device 106. In some examples, the electronic signal corresponding to a rotary and/or linear position may be relayed to computing device 106 via camera 104 and/or vehicle 102.

In some examples, orienting system 108 may include additional orientation and/or pose measuring devices, such as radar, LiDAR, or any other position, rotation, orientation, ranging, or mapping device. In the example shown, orienting system 108 includes radar 210 and LiDAR 212 attached to orienting system 108, e.g., pitch motor 206.

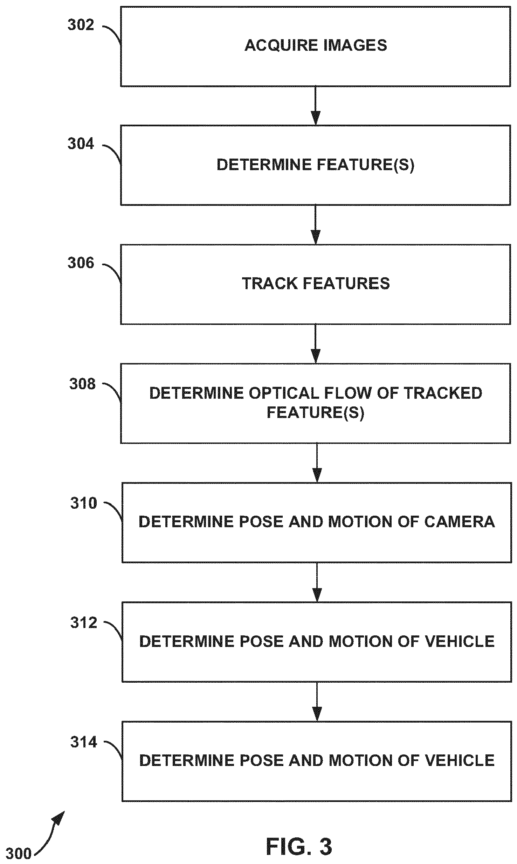

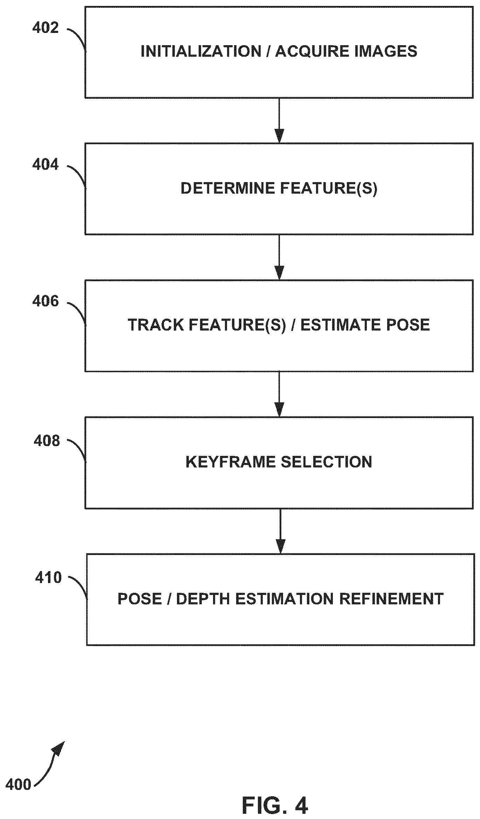

FIGS. 3 and 4 are flowcharts of example methods of vehicle navigation utilizing machine vision. In examples according to the disclosure, the camera, IMU and gimbal may be tightly integrated and the gimbal may improve feature tracking, optical flow determination, and keyframe detection/selection. In some examples, the example method 300 of FIG. 3 relates to the use of an orienting system to improve machine vision of objects of interest such as landmarks, thereby improving camera pose estimation and reduce errors in camera pose estimation due to the different attitudes a vehicle can take, e.g., during flight and/or maneuvering, hovering, takeoff, landing, tracking a dynamic/moving object, and the like. In some examples, the example method 400 of FIG. 4 relates to the use of an orienting system to improve keyframe and feature detection via stabilization improving the "focus" of images of a scene, e.g., via reduction of motion blur and improvement in actual focus of the camera. The method 300 may be used, for example, for keyframe and feature detection improvement during takeoff, landing, hovering, tracking a dynamic/moving object, and the like.

FIG. 3 is a flowchart of an example method 300 of vehicle navigation, in accordance with one or more techniques of this disclosure. Method 300 may be executed, for example, by computing device 106 in communication with vehicle 102, camera 104, and orienting system 108.

A plurality of images, e.g., a sequence of images, may be acquired with a camera (302). For example, camera 104 may acquire a plurality of images of real-world scene 110 including object 112. In some examples, camera 104 may acquire the plurality of images ordered in a sequence at particular times, e.g., the plurality of images may be taken sequentially at 15 frames per second (fps and/or Hz), 30 fps, 60 fps, 120 fps, 240 fps, or higher frame rates. Camera 104 may be mounted or otherwise attached to a gimbal such as orienting system 108, and the gimbal may be mounted to a vehicle such as vehicle 102. Camera 104 may acquire a plurality of images while vehicle 102 is operating, e.g., driving, floating, taking off, landing, hovering, maneuvering, or otherwise in operation. In some examples, camera 104 may acquire a plurality of images while vehicle 102 is not in operation and the gimbal, e.g., orienting system 108, is active. In some examples, camera 104 may include a focal plane array of sensors configured to detect an amount of light at a plurality of positions in an image plane of lens 105, thereby detecting and capturing an image of real-world scene 110 imaged by lens 105. In some examples, the focal plane array may convert one or more images of real-world scene 110 to electronic signals, which may be converted and/or stored as digital values representing the image of real-world scene 110.

Processing circuitry may determine at least one feature in one or more of the plurality of images acquired by the camera (304). For example, processing circuitry 136 and/or processing circuitry 116 of computing device 106 may receive the plurality of digital images acquired by camera 104 and may be configured to execute instructions such as image processing programs and/or algorithms to determine a feature in the plurality of images. For example, processing circuitry 136/116 may determine the image of object 112 included in one or more of the acquired images of real-world scene 110 to be a feature, e.g., a tracking feature. In some examples, processing circuitry 136/116 may identify characteristics of the features. For example, processing circuitry 136/116 may be configured to identify the location of the feature within the one or more images, the size of the feature, a centroid of the feature, the color and/or brightness and/or reflectivity of the feature, one or more materials of the feature, sub-structures of the feature, e.g., a tree trunk and tree branches or a vehicle including tires, glass, and a frame, and the like.

The gimble, e.g., orienting system 108, may track the at least one feature (306). In some examples, processing circuitry 136/116 may cause orienting system 108 to move camera 104 such that the feature stays within the acquired images. For example, processing circuitry 136/116 may cause orienting system 108 to center the feature in the plurality of images. In some examples, tracking the feature may include causing orienting system 108 to track one or more characteristics of a feature, such as centering a centroid of the feature or centering sub-structures of the feature.

In some examples, tracking the feature may reduce rotational noise in the plurality of images. For example, providing active stabilization to the camera via the gimbal may mitigate rotational noise, motion blur, and improve image focus. In some examples, providing active stabilization via the gimbal may increase the modulation transfer function (MTF) of the visual system in motion relative to a landscape, or of a moving feature. In other words, the plurality of images acquired with active stabilization via the gimbal may include spatial frequency content (high frequency components) that would otherwise be lost without stabilization due motion blur and/or rotational noise causing an effective reduction of the optical system MTF during image acquisition.

The processing circuitry may determine an optical flow of an image based on one or more images of the plurality of images (308). For example, the movement of one or more image features in one or more images of a sequence of images over time, which may or may not correspond to the at least one feature being tracked, may be correlated to the pose and motion of the camera acquiring the images. In some examples, optical flow may be the pattern of apparent motion of objects, surfaces, and edges in a visual scene caused by the relative motion between the camera and the scene, e.g., camera 104 and real-world scene 110.

In some examples, optical flow may be an optimization problem wherein the poses of the vehicle and the poses and/or depths of the landmark features are used to optimize a cost function, such as reprojection error or photo-consistency error. For example, the camera may have a first pose at a time t when capturing an image. A feature in the image captured at time t may be determined and processing circuitry may determine and/or estimate a depth of the feature and localize the feature (e.g., in threedimensions). The camera may have a second pose at a second time t + dt when the camera captures a second image (e.g., or a second frame of a sequence of images). The same feature in the image captured at time t + dt may be determined and processing circuitry may determine and/or estimate a depth of the feature and localize the feature, which may allow for a triangulation of the feature/landmark/object. This process may be carried out subsequently for any number of features and/or landmarks as, and when, the features and/or landmarks appear in the camera frame. The optimization may then again be done for any number of camera frames and any number of landmarks. For local optimization, a sliding window of any number of local frames can be done with respect to a keyframe which could be any of the local frames. There optimization may be performed as a global pose optimization using all the detected and tracked features and camera poses.

In some examples, processing circuitry may determine a predicted depth of the at least one feature, e.g., the tracked feature of (306), in one or more images based on the determined optical flow. In some examples, processing circuitry may determine a predicted depth of the at least one feature via LiDAR, radar, or any other ranging technique. For example, processing circuitry 136/116 may receive ranging data from radar 210 and/or LiDAR 212.

The processing circuitry may determine a pose and a motion of the camera for each of the one or more images of the plurality of images based on the determined optical flow (310). For example, the processing circuitry may determine a first pose and a first motion of the camera at a first particular time corresponding to a time at which an image, e.g., a first image of the plurality of images, was acquired (but not necessarily the first image frame of a sequence) and based on the determined optical flow at the time of that first image, which may be derived from image information in that particular image frame and may also be derived from image information of image frames that precede the first image in time. The processing circuitry may determine a second pose and a second motion of the camera at a second particular time, e.g., a time at which the next image of a sequence of images (e.g., a second image) was acquired and based on the determined optical flow at the time of the second image. In other words, between the time of the acquisition of the first and second images, the motion and pose of the camera may change and may be determined by the processing circuitry via optical flow within the first image and the second image.

In some examples, the processing circuitry may determine a pose and a motion of the camera based on an acceleration and a rotation rate of the camera measured by an IMU included with the camera, e.g., in addition to the determined optical flow. In some examples, the processing circuitry may determine a pose and a motion of the camera further based on a predicted depth of the at least one feature, e.g., the feature being tracked at (306).

The processing circuitry may determine a first pose and a first motion of the vehicle based on the determined pose and motion of the camera and gimbal encoder information (312). For example, the encoder information of orienting system 108 enables a translation between the first (or second) pose and motion of camera 104 determined at (310) and the pose and motion of vehicle 102. In other words, the pose and motion of camera 104 includes both the pose and motion of vehicle 102 as well as a change in pose and motion of camera 104 relative to vehicle 102 via motion of orienting system 108 at a particular point in time, and the motion of orienting system 108 relative to vehicle 102 may be tracked, e.g., recorded, via encoders 212-216. In some examples, encoder information and the acquisition of the plurality of images may not directly correspond to the exact same times, and processing circuitry may determine an effective time of the determined first pose and first motion of the vehicle based on one or more determined camera poses and motions and one or more samples of encoder information corresponding to one or more times, e.g., images and encoder samples near each other in time.

In some examples, the processing circuitry may localize and map the vehicle at the at least one tracked feature of (306) based on the determined pose and motion of the camera and/or the first determine pose and first determined motion of the vehicle. For example, the determined pose and motion of camera 104 and/or the determined first pose and first motion of vehicle 102 may be stored as data in memory 134/124 comprising localization and mapping.

The processing circuitry may cause the vehicle to navigate to at least one of a second pose and a second motion of the vehicle (314). In some examples, the second pose and second motion of the vehicle may be different from the determined first pose and first motion of the vehicle. In some examples, processing circuitry 136/116 may determine and output the first pose and first motion of vehicle 102 to another system or a user which then subsequently causes the vehicle to change pose and motion, e.g., to navigate the vehicle based on the first determined pose and first determined motion of vehicle 102. In some examples, the second pose and second motion of the vehicle may be the same as the first pose and the first motion of the vehicle, e.g., the vehicle may be hovering and/or cruising at a constant speed, and a navigation system may cause the vehicle to stay in the same pose and motion over time based on the determine pose and motion of the vehicle at (312). In some examples, processing circuitry 136/116 may localize and map a feature, e.g., the tracked feature of (306), while the vehicle is hovering and/or cruising.

FIG. 4 is a flowchart of an example method 400 of vehicle navigation, in accordance with one or more techniques of this disclosure. Method 400 may be executed, for example, by computing device 106 in communication with vehicle 102, camera 104, and orienting system 108.

Processing circuitry may initialize and a camera may acquire a plurality, or sequence, of images (402). For example, processing circuitry may initialize an application program with instructions for determining a pose and motion of the camera based on information in the plurality of images, encoder information from an orienting system, and other information such as ranging information from the images and/or other measuring devices, e.g., ranging devices such as radar, LiDAR, and the like, by determining initial information at the start of the acquisition of a sequence of images. Processing circuitry may determine the rotatory and/or linear position of orienting system 108 via information from encoders 212-216, may allocate memory for storing and processing image, encoder, and ranging data, and may determine and/or retrieve information relating to a current and/or initial pose and motion of camera 104 at the start of acquisition of a sequence of images.

Processing circuitry may determine at least one feature in one or more of the plurality of images acquired by the camera (404). In some examples, the determination of at least one feature at (404) is substantially similar to the determination of at least one feature at (304) described above. In some examples, orienting system 108 may stabilize camera 104 during image acquisition and reduce motion blur and parallax, thereby improving "focus" (e.g., via improvement of effective MTF as discussed above with reference to FIG. 3) of the images and features contained therein and improving determination of the at least one feature.

The gimble, e.g., orienting system 108, may track the at least one feature (406). In some examples, processing circuitry 136/116 may cause orienting system 108 to move camera 104 such that the feature stays within the acquired images, e.g., substantially similar to tracking the at least one feature at (306) described above. In some examples, orienting system 108 may be an active gimbal, and tracking a feature may include inducing motion of camera 104 via orienting system 108 and locating the at least one feature within the acquired images relative to camera 104 via triangulation, e.g., while vehicle 102 is hovering, stationary, and/or during takeoff and landing. Processing circuitry, e.g., processing circuitry 136/116 may further determine a pose and motion of vehicle 102 based on the location of the at least one feature determined in the images, e.g., while vehicle 102 is hovering, stationary, and/or during takeoff and landing.

Processing circuitry may select and/or determine keyframes within the plurality of images (408). For example, orienting system 108 may actively track the determined at least one feature in the images thereby reducing pure rotations and rotational noise within one or more of the plurality of images. Processing circuitry may select and/or determine one or more keyframes based on the one or images having reduced rotational noise, and/or may determine one or more keyframes including one or more images that have a reduced rotational noise. For example, processing circuitry 136/116 may determine one or more keyframes defining a starting and/or ending of a transition, such as a smooth transition of the at least one feature, and may determine selection of a keyframe based an image including the transition, and that image may happen to have a reduced rotational noise due to the active tracking. In another example, processing circuitry 136/116 may determine one or more keyframes based on an image including the transition and having a reduced rotational noise, e.g., an image including a transition but not having a reduced rotational noise and/or including rotational noise above a predetermined threshold may not be selected as a keyframe. In still another example, processing circuitry 136/116 may determine one or more keyframes based on the image having a reduced rotational noise and the image may or may not include a transition.

Processing circuitry may determine and/or refine a determination of a depth of the at least one feature and a pose and a motion of the camera (410). For example, processing circuitry 136/116 may determine an optical flow of an image based on one or more of the determined keyframes. In some examples, processing circuitry 136/116 may determine an optical flow further based on other images in addition to the one or more keyframes, e.g., images acquired near the time of the one or more keyframes. Processing circuitry 136/116 may determine a predicted depth of the at least one feature based on the optical flow. In some examples, processing circuitry 136/116 may determine a predicted depth of the at least one feature based on a ranging measurement, e.g., via radar 210 and/or LiDAR 212, alone or in addition to the determined optical flow. Processing circuitry 136/116 may determine a pose and a motion of camera 104 based on the determined optical flow and the predicted of the at least one feature. In some examples, processing circuitry 136/116 may determine a pose and a motion of camera 104 further based in an acceleration and a rotational rate of camera 104 via IMU 130. Processing circuitry 136/116 may determine a first pose and a first motion of vehicle 102 based on the determine pose and motion of camera 104 and information from encoders 212-216.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable storage medium encoded with instructions. Instructions embedded or encoded in an article of manufacture including a computer-readable storage medium, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in RAM or cache).

Various examples have been described. These and other examples are within the scope of the following claims.

## Claims

1. A method of vehicle navigation, the method comprising:
acquiring a plurality of images with a camera while a vehicle is operating, wherein the camera is mounted to a gimbal mounted to the vehicle;
determining, using processing circuitry, at least one feature in one or more image of the plurality of images;
tracking, via the gimbal, the at least one feature, wherein tracking the at least one feature comprises causing, by the processing circuitry, the gimbal to move the camera such that rotational noise associated with motion of the vehicle in one or more of the plurality of images is reduced;
determining, using the processing circuitry, an optical flow of one or more of the plurality of images based on the one or more images having reduced rotational noise;
determining, using the processing circuitry, a pose and a motion of the camera for each of the one or more images of the plurality of images based on the determined optical flow;
determining, using the processing circuitry, a first pose and a first motion of the vehicle based on the determined pose and motion of the camera and gimbal encoder information; and
causing, using the processing circuitry, the vehicle to navigate to at least one of a second pose and a second motion of the vehicle based on the determined first pose and first motion of the vehicle.

2. The method of claim 1 further comprising:
simultaneous localizing and mapping the vehicle and the at least one feature based on the determined pose of the camera

3. The method of claim 2, further comprising:
determining, using the processing circuitry, a keyframe based on the one or more images having reduced rotational noise.

4. The method of any one of claims 1 through 3, wherein determining the pose and the motion of the camera is further based on an acceleration and a rotational rate of the camera via an inertial measurement unit (IMU).

5. The method of any one of claims 1 through 4, wherein the at least one of the second pose and the second motion of the vehicle are the same as the first pose and the first motion of the vehicle.

6. The method of any one of claims 1 through 5, further comprising:
determining, using the processing circuitry, a predicted depth of the at least one feature based on the determined optical flow,
wherein determining the pose and the motion of the camera is further based on the predicted depth of the at least one feature.

7. The method of any one of claims 1 through 6, further comprising:
determining, using one of LiDAR and radar, a predicted depth of the at least one feature in the one or more images of the plurality of images,
wherein determining the pose and the motion of the camera is further based on the predicted depth of the at least one feature in the one or more images of the plurality of images.

8. A vehicle navigation system, comprising:
a gimbal mounted on a vehicle;
a camera mounted on the gimbal; and
processing circuitry configured to:
acquire a plurality of images with a camera while a vehicle is operating, wherein the camera is mounted to a gimbal mounted to the vehicle;
determine at least one feature in one or more image of the plurality of images;
track, via the gimbal, the at least one feature, wherein tracking the at least one feature comprises causing the gimbal to move the camera such rotational noise associated with motion of the vehicle in one or more of the plurality of images is reduced;
determine an optical flow of the one or more of the plurality of images based on the determined optical flow;
determine a pose and a motion of the camera for each of the one or more images of the plurality of images based on the determined optical flow;
determine a first pose and a first motion of the vehicle based on the determined pose and motion of the camera and gimbal encoder information; and
cause the vehicle to navigate to at least one of a second pose and a second motion of the vehicle based on the determined first pose and first motion of the vehicle.

9. The vehicle navigation system of claim 8, wherein the instructions further configure the one or more programmable processors to:
simultaneously localize and map the vehicle and the at least one feature based on the determined pose of the camera.

10. The vehicle navigation system of claim 9, wherein the instructions further configure the one or more programmable processors to:
determine a keyframe based on the one or more images having reduced rotational noise.

11. The vehicle navigation system of any one of claims 8 through 10, wherein determining the pose and the motion of the camera is further based on an acceleration and a rotational rate of the camera via a camera inertial measurement unit (IMU)

12. The vehicle navigation system of any one of claims 8 through 11, wherein the at least one of the second pose and the second motion of the vehicle are the same as the first pose and the first motion of the vehicle.

13. The vehicle navigation system of any one of claims 8 through 12, wherein the instructions further configure the one or more programmable processors to:
determine a predicted depth of the at least one feature in the one or more images of the plurality of images based on the determined optical flow,
wherein determining the first pose and the first motion of the camera is further based on the predicted depth of the at least one feature in the one or more images of the plurality of images.

14. The vehicle navigation system of any one of claims 8 through 13, wherein the instructions further configure the one or more programmable processors to:
determine, using one of LiDAR and radar, a predicted depth of the at least one feature in the one or more images of the plurality of images,
wherein determining the first pose and the first motion of the camera is further based on the predicted depth of the at least one feature in the one or more images of the plurality of images.

15. A method of determining a pose and a motion of a vehicle, the method comprising:
acquiring a plurality of images with a camera mounted to a gimbal mounted to a vehicle;
determining, using processing circuitry, at least one feature in one or more image of the plurality of images;
reducing, via image feature tracking, a rotational noise associated with a motion of the camera in the one or more images;
determining, using the processing circuitry, one or more keyframes based on the one or more images with reduced rotational noise;
determining, using the processing circuitry, an optical flow of one or more of the plurality of images based on the one or more keyframes;
determining, using the processing circuitry, a predicted depth of the at least one feature based on the optical flow;
determining, using the processing circuitry, a pose and a motion of the camera based on the optical flow and the predicted depth of the at least one feature; and
determining, using the processing circuitry, a first pose and a first motion of the vehicle based on the determined pose and motion of the camera and gimbal encoder information.
